# EUROPEAN PATENT APPLICATION

(11) **EP 2 515 513 A1**
(43) Date of publication of application: **24.10.2012**
(21) Application number: 11165892.8
(22) Date of filing: 12.05.2011
(51) Int. Cl.: H04M 1/725

(54) **dedicated key for publishing content in social networks**

(30) Priority: 21.04.2011 US 92130
(71) Applicant: HTC Corporation, Taoyuan County 330 (TW)
(72) Inventor: Cielak, Matthew Joseph, Bellevue, 98005 (US); Luke, Hok-sum H, 330, Taoyuan City Taoyuan County (TW); Chen, Hsu-Jung, 330, Taoyuan City Taoyuan County (TW); Shotel, Micah, Bellevue, WA 98005 (US); Lin, Yi-Shan, 330, Taoyuan City Taoyuan County (TW)
(74) Representative: 2K Patentanwälte Blasberg Kewitz & Reichel

(57) **Abstract**

An operation method, applicable to a hand-held electronic device (100) having a display unit (110) and a social networking share hardware button (140), includes: detecting whether the social networking share hardware button (140) is triggered; and in response that the social networking share hardware button (140) is triggered, posting a user share content on a social networking based on a content displayed on the display unit (110).

## Description

### Technical Field

The disclosure relates in general to a hand-held electronic device and an operation method applicable thereto. The present application claims priority of US 13/092,130 filed on April 21, 2011, the whole content of which is hereby incorporated by reference.

### Background

Social networking services like Facebook®, MySpace®, and Twitter® have grown in popularity in recent years. These services are appealing to users because they allow users to maintain contact and keep up with each other by providing a forum for the exchange of personal information. Social messaging services are also extremely popular in that they provide a convenient and simple means for exchanging real time personal information, including what the user is currently doing or where the user is currently located.

Now, mobile phones are now the central communication device, especially for the young generation. Simultaneously, the desired form of communication among these users is evolving. Social networking services now link people in communication webs, with hundreds of millions of people participating worldwide. However, social networking services are basically for computer-based, but consumers may want to friendly extend these personal networks to mobile phones, their preferred communications tool.

### BRIEF SUMMARY

Embodiments of a hand-held electronic device and an operation method applicable thereto are disclosed. If a social networking share hardware button is short pressed, the user may post/share on the user own webpage, a friend webpage, an event webpage or a group/page webpage of the social networking. Further, if the social networking share hardware button is long pressed, the user may post/share his/her current location information on the user own webpage of the social networking.

An example of the disclosure provides an operation method applicable to a hand-held electronic device having a display unit, a communication unit and a social networking share hardware button. The operation method includes: in response to the social networking share hardware button being triggered, posting a user share content on a social networking based on a content displayed on the display unit via the communication unit.

Another example of the disclosure further provides a hand-held electronic device including: a display unit; a communication unit; a social networking share hardware button; and a processing circuit, coupled to the display unit, the social networking share hardware button and the communication unit, in response to the social networking share hardware button being triggered, controlling the hand-held electronic device to post a user share content on a social networking based on a content displayed on the display unit via the communication unit.

Still another example of the disclosure provides a computer-readable medium storing a computer executable program. When the computer executable program is loaded to a hand-held electronic device having a display unit, a communication unit and a social networking share hardware button, the hand-held electronic device executes the following step: in response to the social networking share hardware button being triggered, posting a user share content on a social networking based on a content displayed on the display unit via the communication unit.

It is to be understood that both the foregoing general description and the following detailed description are exemplary and explanatory only and are not restrictive of the disclosed embodiments, as claimed.

### BRIEF DESCRIPTION OF THE DRAWINGS

FIG. 1A and FIG. 1B show a hand-held electronic device of an exemplary embodiment of the disclosure.

FIG 2A~2C show to share a file on the user personal webpage of the social networking by short pressing the social networking share hardware button when viewing the file.

FIG 3A∼3B show to share a web page being read on the user personal webpage of the social networking by short pressing the social networking share hardware button when viewing the web page.

FIG 4A∼4B show to share music on the user personal webpage of the social networking by short pressing the social networking share hardware button when listening the music.

FIG 5A∼5B show to share a video file on the user personal webpage of the social networking by short pressing the social networking share hardware button when viewing the video file.

FIG 6A∼6C show to share the user current location information onto the user personal webpage of the social networking by long pressing the social networking share hardware button.

FIG 7A∼7B show to post onto a friend personal webpage of the social networking by short pressing the social networking share hardware button when viewing a friend contact information.

FIG 8A∼8B show to post onto an event information webpage of the social networking by short pressing the social networking share hardware button when viewing an event information.

FIG 9A∼9B show to post onto a group/page contact information webpage of the social networking by short pressing the social networking share hardware button when viewing a group/page contact information.

FIG 10A∼10B show to post on the user own personal webpage of the social networking by short pressing the social networking share hardware button at a home screen.

### DETAILED DESCRIPTION OF THE DISCLOSURE

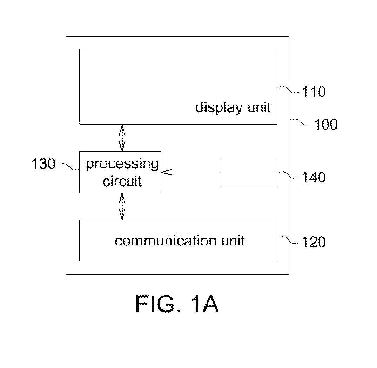

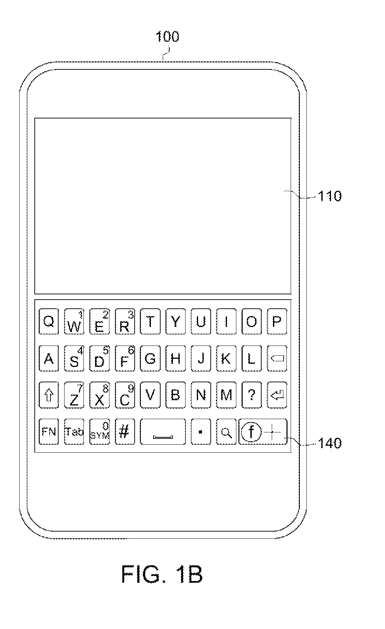

Referring to FIG. 1A and FIG. 1 B, a hand-held electronic device of an exemplary embodiment is shown. The hand-held electronic device 100 is for example but not limited by a mobile phone, a notebook computer, a digital camera, a digital video camera, an electronic dictionary device, a video game console, an electronic book, a PDA (Personal Digital Assistance) and etc. The hand-held electronic device 100 includes a display unit 110, a communication unit 120, a processing circuit 130 and a social networking share hardware button 140.

The display unit 110 is for example a touch panel (for example a resistive/capacitive touch panel), a multi-touch display unit (for example a resistive/capacitive multi-touch display unit), and a non-touch panel etc. The display unit 110 may be formed by an AMOLED (Active Matrix Organic light Emitting diode) panel, a LCD (liquid crystal display) panel for displaying images. The social networking share hardware button 140 is a dedicated hardware button. When the user presses the social networking share hardware button 140, based on different situations, the hand-held electronic device 100 may post the corresponding user share content on the social networking.

The communication unit 120 is for example for providing a communication function, for example, mobile communication function and network linkage function, such as WiFi (Wireless Fidelity) protocol, 3G (third generation) protocol, WAP (Wireless Application Protocol), GPRS (General packet radio service) protocol, WiMAX (Worldwide Interoperability for Microwave Access) protocol, HSDPA.(High Speed Downlink Packet Access, or called 3.5G) protocol, HSUPA (High-Speed Uplink Packet Access, or called 3.75G) protocol.

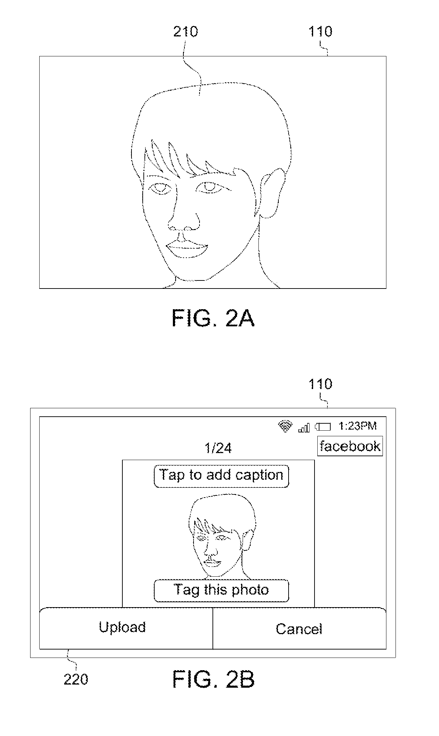

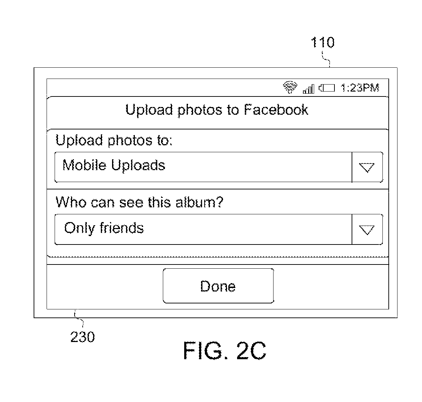

Now explain to share a file on a user personal webpage of the social networking by short pressing the social networking share hardware button when viewing the file. Please refer to FIG 2A~2C. As shown in FIG 2A, an image 210 is displayed on the display unit 110. If the user wants to share this image 210 on the social networking, then the user may short press the social networking share hardware button 140. Under control of the processing circuit 130, the hand-held electronic device 100 may post the image 210 on the user personal webpage 220 of the social networking, as shown in FIG 2B. Further, the user may add caption/tag this image 210. Further, the user may choose this image 210 to store in which album and/or set privacy level of this image 210 on the user personal webpage 230. So, by short pressing the social networking share hardware button 140, the user may share the image file, which is currently displayed on the display unit 110, on the user personal webpage of the social networking.

Alternatively, if the user wants to share any file (for example, audio files, video files or document files) which is currently read/watched/listened to by the user and stored in the hand-held electronic device 100, then the user may short press the social networking share hardware button 140. After the social networking share hardware button 140 is short pressed, under control of the processing circuit 130, the hand-held electronic device 100 may post the file(s) that the user wants to share onto the user personal webpage of the social networking. So, by short pressing the social networking share hardware button 140, the user may share any currently reading/watching/listening file stored in the hand-held electronic device 100, on the user personal webpage of the social networking.

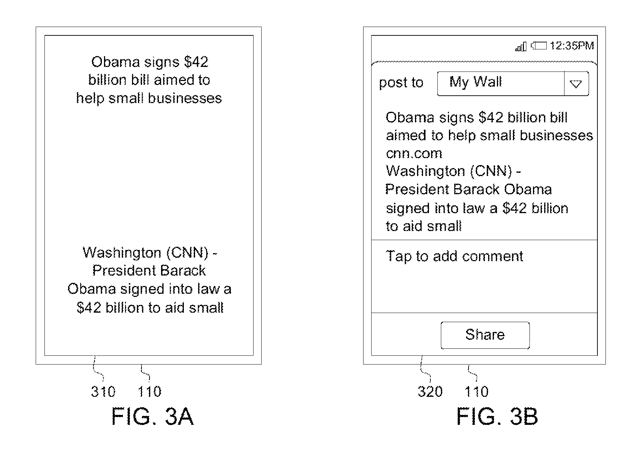

Now explain to share a web page onto the user personal webpage of the social networking by short pressing the social networking share hardware button when viewing the web page. Please refer to FIG 3A∼3B. As shown in FIG 3A, the user is reading a web page 310 displayed on the display unit 110. If the user wants to share this web page 310, then the user may short press the social networking share hardware button 140. Under control of the processing circuit 130, the hand-held electronic device 100 may post a link of the web page 310 on the user personal webpage 320 of the social networking, as shown in FIG 3B. Further, the user may tap to add comment on the user personal webpage 320. Further, the user may decide whether to post a portion of or all of the content of the webpage 310 on the user personal webpage 320. So, by short pressing the social networking share hardware button 140, the user may share the link of the web page being read on the user personal webpage of the social networking.

Additionally, the web page which the user wants to share/post may include any news page from an internet web, and/or any web page from the internet web, and/or any web pages fed to the hand-held electronic device 100 by any application provided by any internet website (for example but not limited by, a feed application provided by Facebook® which actively feeds web pages to the user hand-held electronic device).

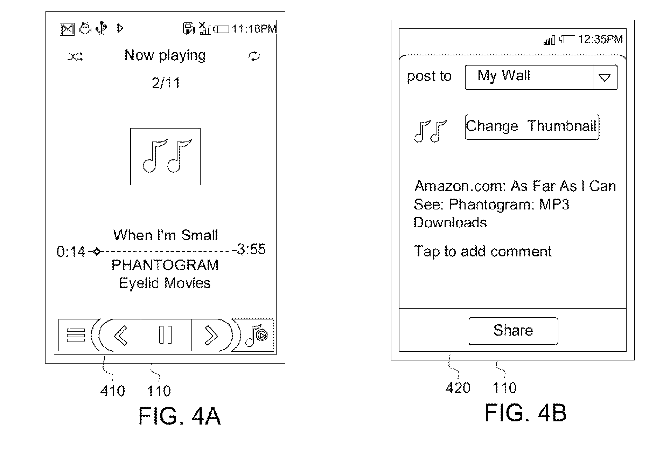

Now explain to share music on the user personal webpage of the social networking by short pressing the social networking share hardware button when listening to the music. Please refer to FIG 4A∼4B. As shown in FIG 4A, the user is listening to music 410. If the user wants to share this music 410 being listened to, then the user may short press the social networking share hardware button 140. Under control of the processing circuit 130, the hand-held electronic device 100 may post a link of the music 410 on the user personal webpage 420 of the social networking, as shown in FIG 4B. In the embodiment, the application program may identify the link of the music 410 being listening, for example by linking to a music web page to fetch the link of the music 410. So, by short pressing the social networking share hardware button 140, the user may share the link of the music being listened to on the user personal webpage of the social networking. Further, the user may add caption on the user personal webpage 420 of the social networking. Further, the user may share a link of a webpage, which briefly describes/introduces the music that the user wants to share, onto the user personal webpage.

Further, if the user wants to share an electronic book, by short pressing the social networking share hardware button 140, the user may be allowed to post a link of a webpage, which briefly describes/introduces the electronic book that the user wants to share, onto the user personal webpage.

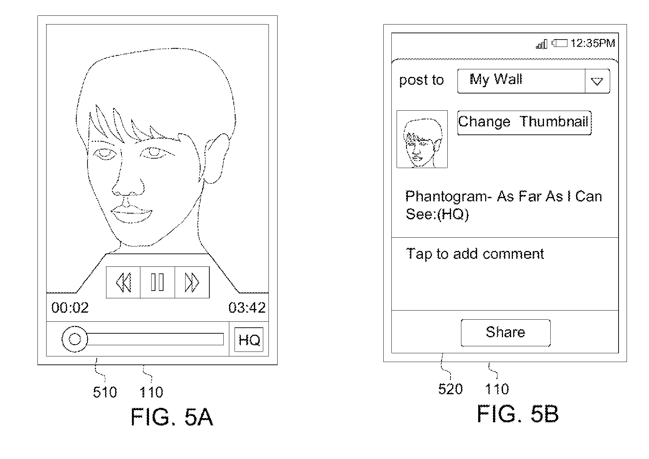

Now explain to share a video file on the user personal webpage of the social networking by short pressing the social networking share hardware button when viewing the video file. Please refer to FIG 5A∼5B. As shown in FIG 5A, the user is watching a video file 510 provided from the internet. If the user wants to share this video file 510 being watched, then the user may short press the social networking share hardware button 140. Under control of the processing circuit 130, the hand-held electronic device 100 may post a link of the video file 510 on the user personal webpage 520 of the social networking, as shown in FIG 5B. So, by short pressing the social networking share hardware button 140, the user may share the video file being watching on the user personal webpage of the social networking. Further, the use may add caption on the user personal webpage 520 of the social networking.

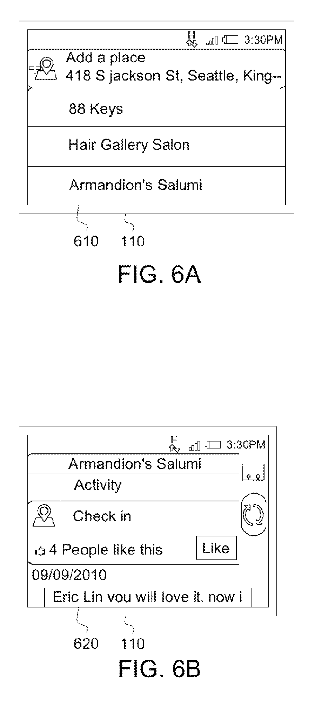

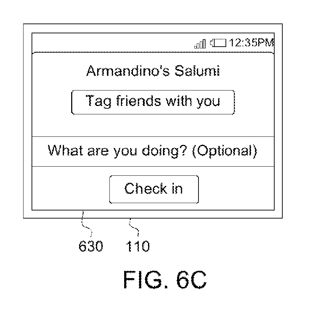

Now explain to share the user current location information onto the user personal webpage of the social networking by long pressing the social networking share hardware button. Please refer to FIG 6A∼6C. At a home screen, if the user presses and holds (i.e. long presses) the social networking share hardware button 140, then the user may share his/her current location information onto the user personal webpage of the social networking. At the home screen, if the user presses and holds (i.e. long presses) the social networking share hardware button 140, a place picker is shown on the user personal webpage 610 of the social networking, which may show nearby location information, for example but not limited by, a building name, a store name etc, as shown in FIG 6A. Then the user may select one of the nearby location information to check in on the user personal webpage 620 of the social networking, as shown in FIG 6B. After the user selects his/her preferred building or store, the user may check in on the user personal webpage 630 of the social networking, as shown in FIG 6C. By so, the user may check in and share with friends where the user had been visited on the user personal webpage of the social networking if the user long presses the social networking share hardware button 140 at the home screen.

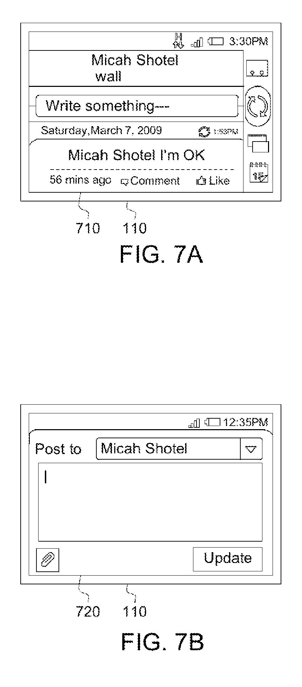

Now explain to post onto a friend personal webpage of the social networking by short pressing the social networking share hardware button when viewing friend contact information. Please refer to FIG 7A∼7B. The user is viewing a friend contact information 710 of a friend, as shown in FIG 7A. The friend contact information 710 is for example stored in a contact list application in the hand-held electronic device 100. If the user wants to share something with his/her friend, then the user may short press the social networking share hardware button 140. Under control of the processing circuit 130, the hand-held electronic device 100 may link to the friend personal webpage 720 of the social networking and allows the user to post/share on the friend personal webpage 720 of the social networking, as shown in FIG 7B.

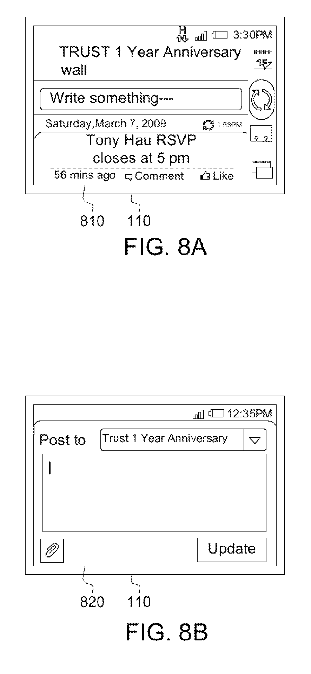

Now explain to post onto an event information webpage of the social networking by short pressing the social networking share hardware button when viewing event information. Please refer to FIG 8A∼8B. The user is viewing an event information 810, as shown in FIG 8A. The event information 810 is for example stored in a schedule application in the hand-held electronic device 100. If the user wants to share something on an event information webpage 820 (which is related to the event information 810) of the social networking, then the user may short press the social networking share hardware button 140. Under control of the processing circuit 130, the hand-held electronic device 100 may allow the user to post/share something onto the event information webpage 820 of the social networking, as shown in FIG 8B.

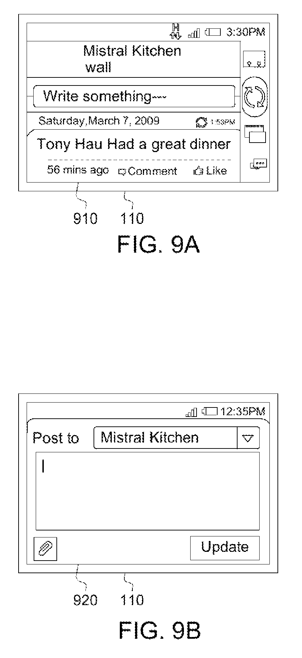

Now explain to post onto a group/page contact information webpage of the social networking by short pressing the social networking share hardware button when viewing a group/page contact information. Please refer to FIG 9A∼9B. The user is viewing a group/page contact information 910, as shown in FIG 9A. The group/page contact information 910 is for example stored in a group/page feed application in the hand-held electronic device 100. If the user wants to post something on a group/page contact information webpage 920 (which is related to this group/page contact information 910) of the social networking, then the user may short press the social networking share hardware button 140. Under control of the processing circuit 130, the hand-held electronic device 100 may allow the user to post/share something on the group/page contact information webpage 920 of the social networking, as shown in FIG 9B.

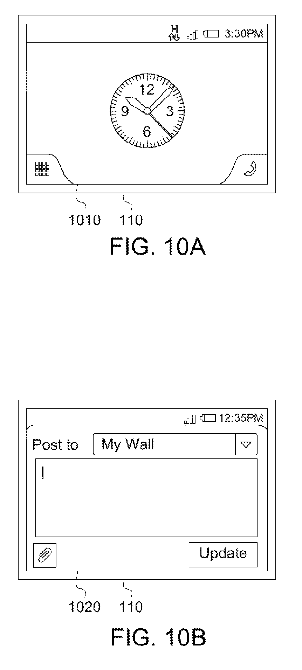

Now explain to post on the user own personal webpage of the social networking by short pressing the social networking share hardware button at a home screen. Please refer to FIG 10A∼10B. As shown in FIG 10A, at a home screen 1010, if the user wants to post on his/her personal webpage of the social networking, then the user may short press the social networking share hardware button 140. Under control of the processing circuit 130, the hand-held electronic device 100 may allow the user to post/share on his/her own personal webpage 1020 of the social networking, as shown in FIG 10B.

At the home screen, if the user presses and holds (i.e. long presses) the social networking share hardware button 140, under control of the application program and the processing circuit 130, the user may be allowed to check in (i.e. share his/her current location information) on the user personal webpage of the social networking. On the other hand, at the home screen, if the user short presses the social networking share hardware button 140, under control of the application program and the processing circuit 130, the user my be allowed to post/share a generic share on the user personal webpage of the social networking.

Further, in one example, after the social networking share hardware button 140 is pressed, if the hand-held electronic device 100 is not linked to the social networking yet, then the hand-held electronic device 100 automatically links to the social networking.

It will be appreciated by those skilled in the art that changes could be made to the disclosed embodiments described above without departing from the broad inventive concept thereof. It is understood, therefore, that the disclosed embodiments are not limited to the particular examples disclosed, but is intended to cover modifications within the spirit and scope of the disclosed embodiments as defined by the claims that follow.

## Claims

1. An operation method applicable to a hand-held electronic device having a display unit, a communication unit and a social networking share hardware button, the operation method including:
in response to the social networking share hardware button being triggered, posting a user share content on a social networking based on a content displayed on the display unit via the communication unit.

2. The operation method according to claim 1, wherein the step of posting the user share content based on the content displayed on the display unit includes:
when the content displayed on the display unit is related to a file, posting the file on a user webpage of the social networking.

3. The operation method according to claim 1, wherein the step of posting the user share content based on the content displayed on the display unit includes:
when the content displayed on the display unit is related to a file, posting a web link related to the file on a user webpage of the social networking.

4. The operation method according to claim 1, wherein the step of posting the user share content based on the content displayed on the display unit includes:
when the content displayed on the display unit is related to a web page, posting a web link of the web page on a user webpage of the social networking.

5. The operation method according to claim 1, wherein the step of posting the user share content based on the content displayed on the display unit includes:
when the content displayed on the display unit is related to a home screen, posting the user share content on a user webpage of the social networking.

6. The operation method according to claim 5, wherein the step of posting the user share content based on the content displayed on the display unit includes:
when the content displayed on the display unit is related to the home screen and the social networking share hardware button is triggered by a short press, posting the user share content on the user webpage of the social networking; and
when the content displayed on the display unit is related to the home screen and the social networking share hardware button is triggered by a long press, posting a current location information as the user share content on the user webpage of the social networking.

7. The operation method according to claim 1, wherein the step of posting the user share content based on the content displayed on the display unit includes:
when the content displayed on the display unit is related to a friend contact information, posting the user share content on a friend webpage of the social networking related to the friend contact information.

8. The operation method according to claim 1, wherein the step of posting the user share content based on the content displayed on the display unit includes:
when the content displayed on the display unit is related to a event information, posting the user share content on a event webpage of the social networking related to the event information.

9. The operation method according to claim 1, wherein the step of posting the user share content based on the content displayed on the display unit includes:
when the content displayed on the display unit is related to a group contact information, posting the user share content on a group webpage of the social networking related to the group contact information.

10. A hand-held electronic device including:
a display unit;
a communication unit;
a social networking share hardware button; and
a processing circuit, coupled to the display unit, the social networking share hardware button and the communication unit, in response to the social networking share hardware button being triggered, controlling the hand-held electronic device to post a user share content on a social networking based on a content displayed on the display unit via the communication unit.

11. The hand-held electronic device according to claim 10, wherein,
when the content displayed on the display unit is related to a file, the processing circuit controls the hand-held electronic device to post the file on a user webpage of the social networking.

12. The hand-held electronic device according to claim 10, wherein,
when the content displayed on the display unit is related to a file, the processing circuit controls the hand-held electronic device to post a web link related to the file on a user webpage of the social networking.

13. The hand-held electronic device according to claim 10, wherein,
when the content displayed on the display unit is related to a web page, the processing circuit controls hand-held electronic device to post a web link of the web page on a user webpage of the social networking.

14. The hand-held electronic device according to claim 10, wherein,
when the content displayed on the display unit is related to a home screen, the processing circuit controls hand-held electronic device to post the user share content on a user webpage of the social networking.

15. The hand-held electronic device according to claim 14, wherein,
when the content displayed on the display unit is related to the home screen and the social networking share hardware button is triggered by a short press, the processing circuit controls the hand-held electronic device to post the user share content on the user webpage of the social networking; and
when the content displayed on the display unit is related to the home screen and the social networking share hardware button is triggered by a long press, the processing circuit controls the hand-held electronic device to post a current location information as the user share content on the user webpage of the social networking.

16. The hand-held electronic device according to claim 10, wherein,
when the content displayed on the display unit is related to a friend contact information, the processing circuit controls hand-held electronic device to post the user share content on a friend webpage of the social networking related to the friend contact information.

17. The hand-held electronic device according to claim 10, wherein,
when the content displayed on the display unit is related to a event information, the processing circuit controls hand-held electronic device to post the user share content on a event webpage of the social networking related to the event information.

18. The hand-held electronic device according to claim 10, wherein,
when the content displayed on the display unit is related to a group contact information, the processing circuit controls hand-held electronic device to post the user share content on a group webpage of the social networking related to the group contact information.

19. A computer-readable medium storing a computer executable program, wherein when the computer executable program is loaded to a hand-held electronic device having a display unit, a communication unit and a social networking share hardware button, the hand-held electronic device executes operations of any of claims 1-9.
